(19) Europäisches Patentamt
European Patent Office
Office européen des brevets

(11) **EP 2 487 270 B1**

(12) **FASCICULE DE BREVET EUROPEEN**

(45) Date de publication et mention
de la délivrance du brevet:
**02.07.2014 Bulletin 2014/27**

(51) Int Cl.:
*C22C 19/00* *(2006.01)*    *H01M 4/38* *(2006.01)*

(21) Numéro de dépôt: **11188182.7**

(22) Date de dépôt: **08.11.2011**

(54) **Matière active pour électrode négative d'accumulateur alcalin de type nickel hydrure métallique**

Stromführende Bauteile für negative Elektrode eines alkalischen Akkumulators vom Typ Nickel-Metallhydrid

Active material for a negative electrode of a nickel-metal hydride alkaline accumulator

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2010 FR 1059878**

(43) Date de publication de la demande:
**15.08.2012 Bulletin 2012/33**

(73) Titulaires:
• **SAFT GROUPE SA**
**93170 Bagnolet (FR)**
• **Centre National de la Recherche Scientifique (CNRS)**
**75794 Paris Cedex 16 (FR)**
• **Université Paris-Est Créteil Val de Marne**
**94010 Creteil Cedex (FR)**

(72) Inventeurs:
• **Bernard, Patrick**
**33000 Bordeaux (FR)**

• **Knosp, Bernard**
**33000 Bordeaux (FR)**
• **Latroche, Michel**
**78210 SAINT-CYR-L'ECOLE (FR)**
• **Zhang, Junxian**
**91510 Lardy (FR)**
• **Serin, Virginie**
**11000 Carcassonne (FR)**
• **Hytch, Martin**
**31000 Toulouse (FR)**

(74) Mandataire: **Hirsch & Associés**
**58, avenue Marceau**
**75008 Paris (FR)**

(56) Documents cités:
**EP-A1- 1 826 283        WO-A1-03/072838**
**JP-A- 2002 069 554    US-A1- 2010 009 259**
**US-B1- 6 200 705        US-B1- 6 214 492**
**US-B1- 6 660 431**

**Description**

DOMAINE TECHNIQUE

Le domaine technique auquel se rapporte l'invention est celui des alliages hydrurables pour électrode négative d'accumulateur à électrolyte alcalin de type nickel hydrure métallique ainsi que celui des procédés de préparation de tels alliages.

ETAT DE LA TECHNIQUE

Les applications comme le véhicule électrique (EV pour Electric Vehicle), le véhicule hybride (HEV pour Hybrid Electric Vehicle), le véhicule hybride rechargeable (PHEV pour plug-in Hybrid Electric Vehicle), l'éclairage de sécurité (ELU pour Emergency Lighting Unit) ou les applications photovoltaïques (PV) demandent des besoins croissants en termes d'énergie volumique. Un accumulateur à électrolyte alcalin de type nickel hydrure métallique (Ni-MH) comprenant une électrode négative à base d'un alliage hydrurable de type $AB_5$ (où A représente un ou des éléments formant des hydrures stables dans les conditions normales de température et de pression, comme par exemple les terres rares, et B un ou des éléments dont les hydrures sont instables dans ces mêmes conditions, comme par exemple le nickel) et une électrode positive à base d'hydroxyde de nickel ne répond pas de manière satisfaisante à l'évolution de ce besoin énergétique.

Dans un accumulateur Ni-MH, la capacité initiale est limitée par construction (ou conception) par la capacité de l'électrode positive. Ainsi, l'augmentation de la capacité initiale de l'accumulateur passe par une augmentation de la capacité de l'électrode positive, donc de son volume de matière active, car l'optimisation de la technologie de cette électrode est à un point de développement où les performances sont désormais équivalentes aux rendements théoriques. De plus, la durée de vie d'un accumulateur Ni-MH est limitée par la corrosion de l'alliage et ses conséquences à savoir la réduction de la capacité de l'électrode négative et l'assèchement du faisceau consécutif à la consommation d'eau par la réaction de corrosion induisant une augmentation d'impédance de l'accumulateur. L'augmentation de la capacité initiale de l'accumulateur se fait donc au détriment de sa durée de vie puisque cela conduit à limiter soit le volume de l'électrolyte, soit celui de l'alliage. Ainsi, une augmentation de la capacité initiale de l'accumulateur ne peut être obtenue qu'au détriment de sa durée de vie. Inversement, il est possible de réaliser une augmentation de la durée de vie de l'accumulateur mais au détriment de sa capacité initiale. Des recherches sont donc menées afin d'obtenir une matière active de l'électrode négative offrant à la fois une capacité et une durée de vie élevées.

Pour augmenter la capacité volumique, de nouveaux matériaux d'électrode négative ont été envisagés. On peut citer les familles d'alliages de stoechiométrie de type $AB_2$. Toutefois, bien que leur capacité initiale soit plus importante que celle d'un alliage de stoechiométrie $AB_5$, leur puissance et leur durée de vie sont considérablement réduites. Récemment, il a été proposé l'utilisation d'un alliage de composition $(R, Mg)B_x$ où R représente un ou plusieurs éléments choisis parmi les terres rares, l'yttrium, Zr et Ti et B représente l'élément nickel partiellement substitué par d'autres éléments tels que Co, Mn, A1 ou Fe, avec x compris entre 3 et 4. Ces alliages peuvent être constitués d'une ou plusieurs phases cristallines, telles que :

- la phase de composition $AB_5$ cristallisant dans le système hexagonal de type $CaCu_5$;
- les phases de composition $AB_2$, dites phases de Laves, cristallisant soit dans le système cubique : phase dite « C15 » de type $MgCu_2$, soit dans le système hexagonal : phases dites « C 14 » de type $MgZn_2$ ou « C36 » de type $MgNi_2$ ;
- les phases de composition $AB_3$ cristallisant soit dans le système hexagonal (type $H\text{-}CeNi_3$), soit dans le système rhomboédrique (type $R\text{-}PuNi_3$) ;
- les phases de composition $A_2B_7$ cristallisant soit dans le système hexagonal (type $H\text{-}Ce_2Ni_7$), soit dans le système rhomboédrique (type $R\text{-}Gd_2Co_7$) ;
- les phases de composition $A_5B_{19}$ cristallisant soit dans le système hexagonal (type $H\text{-}Pr_5Co_{19}$), soit dans le système rhomboédrique (type $R\text{-}Ce_5Co_{19}$) ;
- la phase de composition $AB_4$.

Chacune de ces phases cristallines, à l'exception des phases $AB_5$ et $AB_2$, peut être considérée comme constituée d'un ou plusieurs motifs de type C de formule $AB_5$ associés avec un motif de type L de composition $A_2B_4$ correspondant à 2 formules $AB_2$.

Par exemple :

- une phase cristalline de composition $AB_3$ est constituée d'un motif de type C et d'un motif de type L ;
- une phase cristalline de composition $A_2B_7$ est constituée d'un motif de type C et de deux motifs consécutifs de type L ;

- une phase cristalline de composition $A_5B_{19}$ est constituée d'un motif de type C et de trois motifs consécutifs de type L ;
- une phase cristalline de composition $AB_4$ est constituée d'un motif de type C et de quatre motifs consécutifs de type L.

Les documents suivants décrivent des alliages hydrurables présentant une bonne durée de vie dans des conditions de cycles de charge-décharge.

Le document JP 2001-316744 décrit un alliage hydrurable de formule $Ln_{1-x}Mg_x(Ni_{1-y}T_y)_z$ dans laquelle :

- Ln est un élément choisi parmi les terres rares, Ca, Sr, Sc, Y, Ti, Zr et Hf, le lanthane représentant de 10 à 50% atomique de Ln,
- T est au moins un élément choisi parmi Li, V, Nb, Ta, Cr, Mo, Mn, Fe, Co, Al, Ga, Zn, Sn, In, Cu, Si, P et B;

$$0,05 \leq x < 0,20,\ 0 \leq y \leq 0,5\ et\ 2,8 \leq z \leq 3,9.$$

Le document JP 2002-069554 décrit un alliage hydrurable de formule $R_{1-a}Mg_aNi_bCo_cM_d$ où

R représente au moins deux éléments choisis parmi les terres rares et Y ;

M représente au moins un élément choisi parmi Mn, Fe, V, Cr, Nb, Al, Ga, Zn, Sn, Cu, Si, P et B ; 0,15<a<0,35 ; $0 \leq c \leq 1,5$ ; $0 \leq d \leq 0,2$ et $2,9 < b+c+d < 3,5$. Il est dit que des phases cristallines de type $AB_2$, $AB_3$, $A_2B_7$, $AB_5$, $Mg_2Ni$ et $MgNi_2$ peuvent être obtenues.

Le document EP-A-1 026 764 décrit un alliage hydrurable de formule $AM_x$ dans laquelle A peut être une terre rare, éventuellement substituée par du magnésium ; et M peut être choisi parmi Cr, Mn, Fe, Co et Ni. x est compris entre 2,7 et 3,8. Le rayon atomique moyen r des atomes de l'alliage est compris entre 1,36 et 1,39 Å. x et r satisfont la relation $1,42 \leq 0,017x+r \leq 1,44$.

Le document US 6 214 492 décrit un alliage hydrurable comprenant une phase cristalline comprenant au moins une maille unitaire qui est un empilement d'au moins une structure de type $A_2B_4$ et au moins une structure de type $AB_5$, le ratio entre le nombre de structures de type $A_2B_4$ et le nombre de structures de type $AB_5$ est compris entre 0,5 et 1. De préférence, la maille unitaire est un empilement ordonné de type LCLCC, dans lequel L représente la structure de type $A_2B_4$ et C représente la structure de type $AB_5$. La phase cristalline comprend une répétition d'empilements de type LCLCC.

Le document US 2004/0134569 décrit un alliage hydrurable de formule $Ln_{1-x}Mg_xNi_{y-a}Al_a$ dans laquelle Ln est au moins une terre rare ; $0,05 \leq x < 0,20$ ; $2,8 \leq y \leq 3,9$ et $0,10 \leq a \leq 0,25$.

Le document US 2004/0146782 décrit un alliage hydrurable de formule $Ln_{1-x}Mg_xNi_{y-a}M_a$ dans laquelle Ln est au moins une terre rare, M est au moins un élément choisi parmi Al, V, Nb, Ta, Cr, Mo, Mn, Fe, Co, Ga, Zn, Sn, In, Cu, Si et P et $0,05 \leq x < 0,20$, $2,8 \leq y \leq 3,9$ et $0,10 \leq a \leq 0,50$.

Le document US 2005/0100789 décrit une électrode négative d'un accumulateur nickel hydrure métallique, comprenant :

a) un alliage hydrurable de formule $Ln_{1-x}Mg_xNi_yAl_zM_a$ dans laquelle Ln est au moins une terre rare, M est un élément autre qu'une terre rare, Mg, Ni ou Al, et $0,10 \leq x < 0,30$, $2,8 \leq y \leq 3,6$, $0 \leq z \leq 0,30$ et $3,0 \leq y+z+a \leq 3,6$ et

b) une quantité de manganèse inférieure à 1 % par rapport au poids de l'alliage hydrurable. Ce document décrit qu'un alliage cristallisant dans la structure $AB_5$ est facilement oxydé. Il ne permet donc pas d'obtenir une bonne durée de vie de l'électrode en cyclage.

Les documents US 2005/0175896 et US 2005/0164083 décrivent un alliage hydrurable comprenant au moins une terre rare, du magnésium, du nickel et de l'aluminium, et cristallisant principalement dans une structure de type $Ce_2Ni_7$.

Le document EP-A-2 096 691 décrit un alliage hydrurable de formule $Ln_{1-x}Mg_xNi_{y-a-b}Al_aM_b$ où Ln représente au moins deux éléments dont le lanthane, M représente au moins un élément choisi parmi Co, Mn et Zn, $0,1 \leq x \leq 0,20$, $3,6 \leq y \leq 3,9$, $0,1 \leq a \leq 0,2$ et $0 \leq b \leq 0,1$. Cet alliage comprend majoritairement une phase cristalline de type $A_5B_{19}$ et peut comprendre les phases $A_2B_7$ et/ou $AB_5$. La pression d'hydrogène en équilibre à 40°C est comprise entre 0,3 et 1,7 bar pour une quantité d'hydrogène absorbée égale à 0,5 H/M

Le document US 2008/0085209 décrit un alliage hydrurable de formule $R_{1-u}Mg_uNi_{t-v}M_v$ dans laquelle R représente au moins un élément choisi parmi La, Ce, Nd et Pr ; M représente un ou plusieurs éléments choisis parmi Mn, Fe, Al, Co, Cu, Zr, Sn et M ne contient pas Cr ; $0 \leq u \leq 0,25$, $v \leq 0,5$ et $3,5 \leq t \leq 4,5$. Cet alliage comprend majoritairement une phase cristalline de type $A_5B_{19}$ et éventuellement les phases $A_2B_7$ et/ou $AB_5$. La pression d'hydrogène en équilibre à 40°C est inférieure à 1,5 bar pour une quantité d'hydrogène absorbée inférieure à 1%.

Le document JP 2010-073424 décrit un alliage hydrurable contenant une terre rare, du magnésium et du nickel. Il comprend un empilement de phases cristallines cristallisant dans les systèmes $AB_3$, $A_2B_7$, $A_5B_{19}$, $AB_4$ et $AB_5$. Les

phases $AB_3$, $A_2B_7$, $A_5B_{19}$, $AB_4$ sont constituées chacune d'un empilement d'un motif de type $A_2B_4$ avec n motifs de type $AB_5$, n allant de 1 à 4. L'empilement des phases cristallines est effectué de manière ordonnée, c'est-à-dire, avec une variation progressive du paramètre n, donc du nombre de motifs de type $AB_5$ dans la direction de l'empilement. Il est indiqué l'ordre d'empilement suivant $AB_3$, $A_2B_7$, $A_5B_{19}$, $AB_4$, c'est-à-dire un ratio B/A de 3 ; 3,5 ; 3,8 et 4 respectivement. Cette augmentation progressive du ratio B/A indique une augmentation progressive de la quantité de nickel par rapport à la quantité totale de terres rares et de magnésium dans la direction de l'empilement. Le nombre n de motifs de type $AB_5$ augmente progressivement dans la direction de l'empilement.

Le document JP 09-194971 décrit un alliage hydrurable de formule $R_2(Ni_{7-x-y-z}Mn_xA_yB_z)_n$ dans laquelle R représente au moins une terre rare, A représente au moins un élément choisi parmi Co, Cr, Fe, Al, Zr, W, Mo, Ti ; et B représente au moins un élément choisi parmi Cu, Nb, V ; $0,3 \leq x \leq 1,5$ ; $0 \leq y \leq 1,0$; $0 \leq z \leq 1,0$ ; $y+z \leq 1,0$ et $0,96 \leq n \leq 1,1$. Cet alliage comprend une phase cristalline de type hexagonale $Ce_2Ni_7$.

Le document EP-A-0 783 040 décrit un alliage hydrurable de formule $(R_{1-x}L_x)(Ni_{1-y}M_y)_z$ où R représente La, Ce, Pr ou Nd ; M représente Co, Al, Mn, Fe, Cu, Zr, Ti, Mo, Si, V, Cr, Nb, Hf, Ta, W, B ou C ; avec $0,05 \leq x \leq 0,4$ ; $0 \leq y \leq 0,5$ et $3,0 \leq z \leq 4,5$.

Le document JP 2004-115870 décrit un alliage hydrurable de formule $Ln_{1-x}Mg_xNi_yM_z$ dans laquelle Ln représente au moins un élément choisi parmi Y, Sc et les terres rares ; M représente un ou plusieurs éléments choisis parmi Co, Mn, Al, Fe, V, Cr, Nb, Ga, Zn, Sn, Cu, Si, P ou B ; $0,1 \leq x \leq 0,5$ ; $2,5 \leq y \leq 3,5$ ; $0 \leq z \leq 0,5$ et $3,0 \leq y+z \leq 3,5$.

On recherche une matière active d'électrode présentant une capacité massique initiale élevée ainsi qu'une bonne durée de vie en cyclage. Une telle matière active est caractérisée par une capacité massique initiale d'au moins 310 mAh/g et par une dégradation de capacité inférieure à 15% après 100 cycles. On recherche également un procédé de préparation d'une telle matière active.

RESUME DE L'INVENTION

A cet effet, l'invention a pour objet un alliage hydrurable, de formule $R_{1-x-y}Mg_xM_yNi_{s-a}B_a$ dans laquelle

- R est choisi dans le groupe consistant en les terres rares, l'yttrium et un mélange de ceux-ci ;
- M représente Zr et/ou Ti ;
- B est choisi dans le groupe consistant en Mn, Al, Co, Fe et un mélange de ceux-ci ; $0,1 < x < 0,4$; $0 < y < 0,1$ ; $3 < s < 4,5$ et $0 < a < 1$ ;

dans lequel au moins 5% du volume est constitué d'un empilement de séquences d'un motif de type $A_2B_4$ et n motifs de type $CaCu_5$ distribuées de façon aléatoire suivant une direction, n étant un nombre entier compris entre 1 et 10 et représentant le nombre de motifs de type $CaCu_5$ par motif de type $A_2B_4$.

Selon un mode de réalisation, le volume constitué de l'empilement de séquences d'un motif de type $A_2B_4$ et n motifs de type $CaCu_5$ distribuées de façon aléatoire, représente au moins 10 % du volume de l'alliage, de préférence au moins 20%.

Selon un mode de réalisation, le volume constitué de l'empilement de séquences d'un motif de type $A_2B_4$ et n motifs de type $CaCu_5$ distribuées de façon aléatoire, représente moins de 90 % du volume de l'alliage, de préférence moins de 70%.

Selon un mode de réalisation, n est inférieur ou égal à 8, de préférence inférieur ou égal à 6, de préférence encore inférieur ou égal à 4.

Selon un mode de réalisation, x est compris entre 0,1 et 0,3, de préférence entre 0,15 et 0,25.

Selon un mode de réalisation, a est inférieur à 0,3, de préférence inférieur à 0,15.

Selon un mode de réalisation, s est compris entre 3 et 4, de préférence entre 3,5 et 4.

Selon un mode de réalisation, l'alliage comprend Nd et Pr, et le ratio molaire R"/R' est inférieur à 0,5, R" désignant la somme des nombres de moles de Nd et de Pr et R' désignant la somme des nombres de moles de terres rares, Y, Zr et Ti.

L'invention concerne également un procédé de fabrication d'un alliage hydrurable comprenant les étapes de :

a) mélange de $Mg_2Ni$ avec un composé comprenant :

i) du nickel,
ii) un ou plusieurs éléments choisis dans le groupe consistant en les terres rares et l'yttrium, avec éventuellement Ti et/ou Zr,
iii) éventuellement un élément choisi dans le groupe consistant en Mn, Al, Co, Fe et un mélange de ceux-ci ;

b) broyage du mélange ;

c) frittage du mélange par compression du mélange et application d'un courant à travers le mélange.

Selon un mode de réalisation, l'étape c) est réalisée par la technique de frittage flash.

Selon un mode de réalisation, le composé de l'étape a) a pour formule $R'Ni_y$ avec y compris entre 4 et 5, R' désignant la somme des nombres de moles de terres rares, Y, Zr et Ti.

Selon un mode de réalisation, la compression de l'étape c) est réalisée sous une pression comprise entre 40 et 80 MPa.

Selon un mode de réalisation, l'étape c) est réalisée à une température comprise entre 700 et 900°C.

Selon un mode de réalisation, l'alliage hydrurable a pour formule $R_{1-x-y}Mg_xM_yNi_{s-a}B_a$ dans laquelle

- R est choisi dans le groupe consistant en les terres rares, l'yttrium et un mélange de ceux-ci ;
- M représente Zr et/ou Ti ;
- B est choisi dans le groupe consistant en Mn, Al, Co, Fe et un mélange de ceux-ci ; $0,1 <x<0,4$ ; $0{\leq}y<0,1$ ; $3 <s<4,5$ et $0{\leq}a< 1$.

Ce procédé peut être utilisé pour fabriquer l'alliage selon l'invention.

Cet alliage peut être utilisé comme matière active d'une électrode négative d'accumulateur alcalin de type nickel hydrure métallique. L'invention concerne donc également une électrode comprenant ledit alliage ainsi qu'un accumulateur de type nickel hydrure métallique comprenant cette électrode.

Selon un mode de réalisation, l'électrode comprend de 0,4 à 1% en poids d'oxyde d'yttrium et/ou de 1 à 2% en poids d'oxyde de manganèse.

BREVE DESCRIPTION DES FIGURES

La Figure 1A présente une image obtenue par microscopie électronique en transmission à haute résolution (HRTEM) d'un alliage de l'art antérieur comprenant un grain monocristallin cristallisant dans le système $A_5B_{19}$.

La Figure 1B est une représentation schématique de l'analyse d'un grain monocristallin cristallisant dans le système $A_5B_{19}$. Ce grain est constitué uniquement d'un empilement de séquences comprenant un motif de type L pour trois motifs de type C.

La Figure 2A présente une image obtenue par microscopie électronique en transmission à haute résolution (HRTEM) d'un grain d'un alliage selon l'invention présentant des séquences de motifs de type $AB_3$, $A_2B_7$, $A_5B_{19}$, $AB_4$ et $A_7B_{29}$.

La figure 2B est une représentation schématique de l'analyse au microscope électronique à transmission à haute résolution d'un grain d'un alliage selon l'invention présentant des séquences de motifs de type $AB_3$, $A_2B_7$, $A_5B_{19}$, $AB_4$ et $A_7B_{29}$. Ce grain est constitué d'un empilement aléatoire de séquences d'un motif de type L pour n motifs de type C, n variant de 1 à 5.

La Figure 3 représente une courbe isotherme Pression-Composition à 40°C d'un alliage hydrurable selon l'invention (courbe PCT).

La Figure 4 représente une vue schématique du dispositif utilisé dans le procédé de frittage flash (SPS Spark Plasma Sintering).

DESCRIPTION DETAILLEE DES MODES DE REALISATION DE L'INVENTION

L'alliage selon l'invention a pour formule $R_{1-x-y}Mg_xM_yNi_{s-a}B_a$ dans laquelle :

- R est choisi dans le groupe consistant en les terres rares, l'yttrium et un mélange de ceux-ci ;
- M représente Zr et/ou Ti ;
- B est choisi dans le groupe consistant en Mn, Al, Co, Fe et un mélange de ceux-ci ; $0,1 <x<0,4$ ; $0{\leq}y<0,1$ ; $3 <s<4,5$ et $0{\leq}a<1$ ;

Dans un mode de réalisation, R comprend La, Nd, Pr et Sm.

Dans un mode de réalisation, R est constitué de La, Nd, Pr et Sm ; B est un ou plusieurs éléments choisis parmi Mn, Al et Co ; x est compris entre 0,1 et 0,3 ; s est compris entre 3 et 4 et a est inférieur à 0,5. La stoechiométrie est supérieure à $AB_3$ car cela correspond à un motif $AB_5$ pour un motif $A_2B_4$. La limite supérieure correspond à la phase $AB_4$, qui a été détectée par Ozaki [T.Ozaki and al., J.Alloys and Comp., vol 446-447, pp 620-624, 2007] et qui correspond à 4 motifs de type $AB_5$ pour un motif de type $A_2B_4$. Par ailleurs, le taux de Mg est supérieur à 0,1 afin d'obtenir une capacité suffisante. Une augmentation du taux de Mg au-delà de 0,3 tend à favoriser un mélange de phases $AB_3$ (ou

$AB_2$) et $AB_5$ au détriment des autres phases de type $A_{n+2}B_{5n+4}$. Les substitutions partielles de Ni par Mn et Al permettent d'abaisser la pression d'hydrogène en équilibre tandis que Co et Al favorisent la stabilité en cyclage de l'alliage.

Dans un mode de réalisation, R est constitué de La, Nd, Pr et Sm ; le rapport R"/R' est inférieur à 0,5 ; R" désignant la somme des nombres de moles de Nd et de Pr ; B est un ou plusieurs éléments choisis parmi Al et Co; x est compris entre 0,1 et 0,3 ; s est compris entre 3,5 et 4 ; et a est inférieur à 0,5. Pour des valeurs de s inférieures à 3,5, la proportion de phase $AB_3$, qui se décompose au cours du cyclage, augmente et entraîne une diminution accélérée de la capacité au cours du cyclage. Pour éviter cela, on préfère utiliser des stoechiométries supérieures ou égales à 3,5 et utiliser l'aluminium et le cobalt, qui favorisent la stabilité en cyclage, plutôt que le manganèse comme substituants du nickel. Toutefois, ces modifications entraînent une augmentation de la pression d'hydrogène en équilibre. Pour maintenir cette pression dans des limites acceptables pour l'application aux batteries Ni-MH, le taux de Nd + Pr est réduit au profit du La.

Dans un mode de réalisation, R est constitué de La, Nd, Pr, Sm ; le rapport R"/R' est inférieur à 0,5 ; B est un ou plusieurs éléments choisis parmi Al et Co ; x est compris entre 0,15 et 0,25 ; s est compris entre 3,5 et 4 ; et a est inférieur à 0,3. L'aluminium et le cobalt ont pour effet d'améliorer la stabilité de l'alliage en cyclage. Toutefois, la capacité de l'alliage diminue lorsque leur taux augmente au-delà d'un seuil qui dépend du taux de magnésium. Cette diminution de capacité est limitée si le taux de magnésium est restreint entre 0,15 et 0,25 et si le taux Al+Co est inférieur à 0,3.

Dans un mode de réalisation, R est constitué de La, Nd, Pr, Sm ; le rapport R"/R' est inférieur à 0,5 ; B est Al ; x est compris entre 0,15 et 0,25 ; s est compris entre 3,5 et 4, et a est inférieur à 0,15. Le cobalt étant un élément cher et spéculatif, il apparaît préférable d'utiliser un alliage sans cobalt et de ne retenir que l'aluminium comme substituant du nickel. Toutefois, le taux d'aluminium supérieur à 0,15 entraîne une diminution de la pression d'équilibre et donc de la tension de l'élément.

La composition de l'alliage peut être déterminée par analyse chimique élémentaire par la méthode de spectroscopie d'émission plasma (ICP), la spectroscopie d'absorption atomique ou la spectroscopie de fluorescence des rayons X.

L'alliage comprend une ou plusieurs phases cristallines choisies parmi :

a) la phase $AB_5$ cristallisant dans le système hexagonal de type $CaCu_5$ ;
b) les phases $AB_2$, dites phases de Laves, cristallisant soit dans le système cubique : phase dite « C15 » de type $MgCu_2$, soit dans le système hexagonal : phases dites « C14 » de type $MgZn_2$ ou « C36 » de type $MgNi_2$.
c) les phases de type $R_{m+1}MgNi_{5m+4}$ constituées d'un empilement périodique de séquences comportant m motifs C (identiques à la maille de la structure type $CaCu_5$) et d'un motif L (motif constituant des phases de Laves $AB_2$), de symétrie hexagonale (H) ou rhomboédrique (R) avec m allant de 1 à 10.

m=1 correspond aux phases $AB_3$ cristallisant soit dans le système hexagonal (type $H-CeNi_3$), soit dans le système rhomboédrique (type $R-PuNi_3$),
m=2 correspond aux phases $A_2B_7$ cristallisant soit dans le système hexagonal (type $H-Ce_2Ni_7$), soit dans le système rhomboédrique (type $R-Gd_2Co_7$) ;
m=3 correspond aux phases $A_5B_{19}$ cristallisant soit dans le système hexagonal (type $H-Pr_5Co_{19}$), soit dans le système rhomboédrique (type $R-Ce_5Co_{19}$) ;
m=4 correspond à la phase de composition $AB_4$.

Ces phases cristallines peuvent être détectées par analyse d'un diagramme de diffraction des rayons X.

Au moins 5% en volume de l'alliage est constitué d'une phase dite 'cristalline à empilement aléatoire', caractérisée par un empilement de séquences d'un motif de type $A_2B_4$ et de n motifs de type $CaCu_5$ distribuées de façon aléatoire suivant une direction, n étant un nombre entier compris entre 1 et 10 et représentant le nombre de motifs de type $CaCu_5$ par motif de type $A_2B_4$.

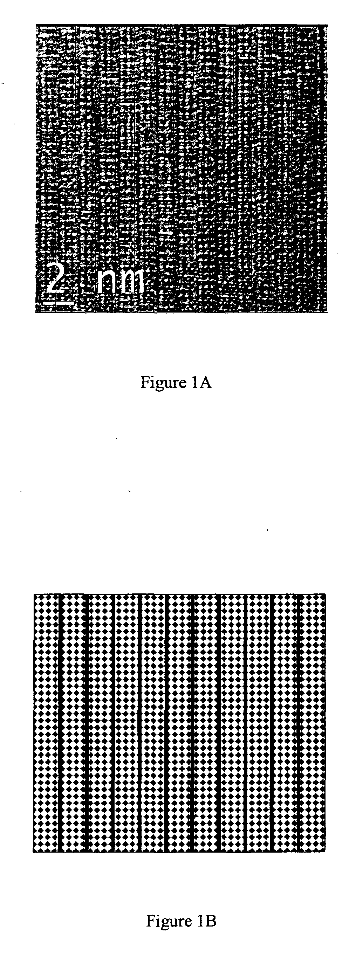

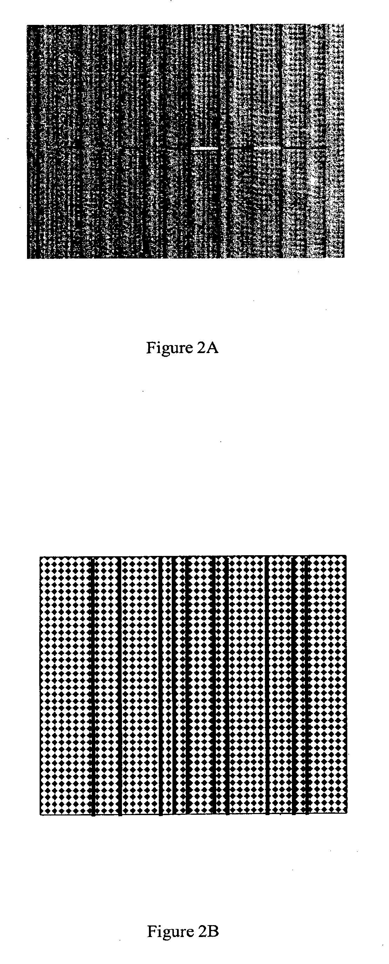

On entend par « variation aléatoire » la variation dans laquelle la valeur prise par le paramètre n pour une séquence donnée est indépendante des valeurs prises par ce paramètre dans les séquences adjacentes. La structure dite 'cristalline à empilement aléatoire' peut être observée en microscopie électronique par transmission à haute résolution (HRTEM pour High Resolution Transmission Electron Microscopy). Cette structure sera mieux comprise en faisant référence aux exemples illustrés aux figures 1A, 1B et 2A, 2B.

La figure 1A montre une image obtenue par microscopie électronique par transmission à haute résolution (HRTEM) d'un domaine de matière d'un alliage de l'art antérieur et la figure 1B, sa représentation schématique. Ce domaine appartient à un grain, c'est-à-dire une zone constituée d'un même cristal. Ce grain possède une structure dite 'cristalline à empilement ordonné'. Chaque ligne verticale représente l'alignement d'un même motif. Les lignes sombres correspondent à un alignement de motifs de type L. Les lignes claires correspondent à un alignement de motifs de type C. Dans la direction verticale, le motif est soit toujours un motif de type C, soit toujours un motif de type L. En balayant le domaine de matière selon une direction horizontale, on observe que celui-ci peut être considéré comme étant constitué d'une répétition de séquences constituées chacune d'un motif de type $A_2B_4$ et de 3 motifs de type $CaCu_5$ (1L3C). Le

nombre de motifs de type CaCu$_5$ inséré entre deux motifs de type A$_2$B$_4$ est constant et égal à 3. Ce nombre étant constant, la distance séparant deux lignes sombres est identique sur le domaine de matière analysé. Ceci indique que le domaine de matière soumis à analyse est constitué uniquement de la phase cristalline de type A$_5$B$_{19}$ qui est constituée de séquences de motifs de type 1L3C. Cet alliage de l'art antérieur présente une structure périodique.

La figure 2A montre une image obtenue par microscopie électronique par transmission à haute résolution (HRTEM) d'un domaine de matière d'un alliage selon l'invention appartenant à un grain de structure dite « cristalline à empilement aléatoire » et la figure 2B, sa représentation schématique. Elle montre une succession de raies verticales, certaines apparaissant sous la forme d'une raie sombre, d'autres sous la forme d'une raie claire. Une raie sombre représente un alignement de motifs de type L. Une raie claire représente un alignement de motifs de type C. Dans la direction verticale des Figures 2A et 2B, le motif est soit toujours un motif de type C, soit toujours un motif de type L. En parcourant le domaine de matière selon une direction horizontale, on observe que celui-ci peut être considéré comme étant constitué d'un empilement de séquences constituées chacune de n motifs de type CaCu$_5$ pour un motif de type A$_2$B$_4$, n étant un nombre entier compris entre 1 et 10 variant de manière aléatoire selon la direction horizontale de l'empilement. Le nombre n de motifs de type C entre deux motifs de type L n'est pas constant et varie de manière aléatoire. Cette variation aléatoire du nombre de motifs C entre deux motifs L dans un même grain caractérise l'invention. Le nombre de motifs de type C entre chaque motif de type L peut être relevé sur les figures 2A et 2B. En parcourant la figure 2B de gauche à droite, on constate que n prend les valeurs successives suivantes «7, 3, 5, 2, 2, 3, 2, 4, 3, 2, 5». La phase dite 'cristalline à empilement aléatoire' selon l'invention est caractérisée par l'existence d'un ordre à courte distance (< 6 nm) suivant la direction de l'empilement et par l'existence d'un ordre à plus longue distance suivant les plans normaux à l'empilement, dans toute la section du grain.

Selon un mode de réalisation, n varie de manière aléatoire et non périodique.

Selon un mode de réalisation, la valeur de n dans les différentes séquences est inférieure ou égale à 8, de préférence inférieure ou égale à 6, de préférence encore inférieure ou égale à 4.

Selon un mode de réalisation, le volume de ladite phase 'cristalline à empilement aléatoire' est supérieur à 10%, de préférence encore, supérieur à 20% et inférieur à 70% par rapport à l'alliage.

Selon un mode de réalisation, l'alliage présente une capacité d'absorption d'hydrogène supérieure à 1% massique, de préférence supérieure à 1,3%, de préférence encore supérieure à 1,45%.

Selon un mode de réalisation, l'alliage présente une pression d'équilibre avec l'hydrogène comprise entre 0,01 et 5 bar à 40°C pour une concentration massique en hydrogène dans l'alliage de 0,5%. La capacité d'absorption d'hydrogène par l'alliage et la pression d'équilibre avec l'hydrogène pour une concentration massique d'hydrogène dans l'alliage de 0,5% peuvent être déterminées à partir d'une courbe isotherme pression-composition représentant la pression de dihydrogène en équilibre avec une concentration d'hydrogène insérée dans l'alliage (en % massique ou en mole de H insérée par mole de métal). Le rapport H/Métal est le rapport entre le nombre de moles d'atomes d'hydrogène insérés dans l'alliage et le nombre de moles d'atomes de métal de l'alliage. On désigne par « Métal », l'ensemble des métaux contenus dans l'alliage, c'est-à-dire R, Mg, M, Ni et B.

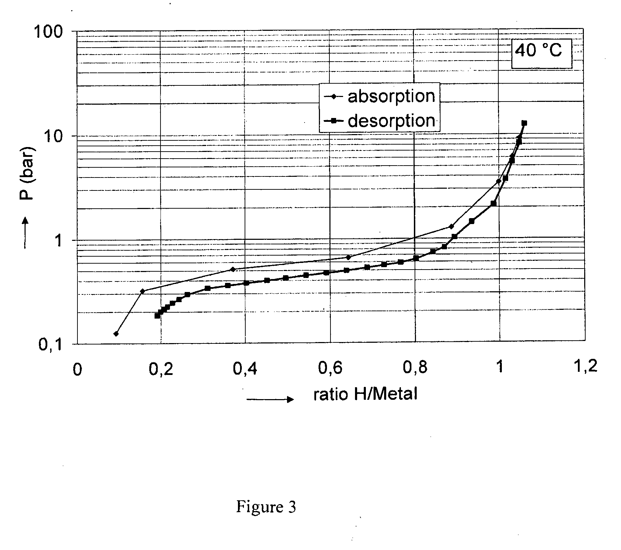

La courbe de la Figure 3 représente la pression de dihydrogène en fonction du taux d'insertion de l'hydrogène (ratio H/métal) dans l'alliage à 40°C (courbe PCT). Elle est établie après 3 cycles d'activation (absorption et de désorption de l'hydrogène) de l'alliage et dégazage de l'hydrogène résiduel à 80°C. Cette courbe présente une première partie à basse pression, où la pression varie rapidement en fonction de la concentration en hydrogène. Durant cette partie, l'hydrogène atomique est « soluble » dans l'alliage et diffuse progressivement à travers celui-ci. Ceci constitue une solution solide (désordonnée) d'hydrogène dans l'alliage. L'hydrure ne se forme pas encore.

Dans une deuxième partie, la courbe présente la forme d'un plateau légèrement incliné. Le début de ce plateau marque le début de la formation de l'hydrure (dans l'hydrure, l'hydrogène atomique occupe les sites d'insertion de l'alliage de manière ordonnée). Durant la phase de plateau, l'hydrogène atomique occupe progressivement tous les sites d'insertion de l'alliage. La fin du plateau correspond à la situation où pratiquement tous les sites d'insertion de l'alliage sont occupés par l'hydrogène.

Dans une troisième partie, la pression d'hydrogène augmente à nouveau rapidement avec la concentration en hydrogène et la quantité d'hydrogène que peut encore insérer l'alliage augmente peu. L'alliage se trouve alors uniquement sous la forme de l'hydrure dans lequel l'hydrogène atomique excédentaire est inséré de manière désordonnée. La désorption d'hydrogène se produit à une pression de plateau inférieure à la pression d'absorption.

On peut déterminer sur l'axe des abscisses de la courbe PCT la position du rapport H/Métal égal à 0,5 et en déduire la valeur de la pression à l'équilibre par lecture de l'ordonnée du point correspondant de la courbe de désorption. On peut également déterminer la position de l'axe des abscisses de la courbe PCT correspondant à une concentration massique en hydrogène de 0,5%, connaissant la masse molaire de l'hydrogène atomique de 1 g et la masse molaire de l'alliage utilisé. On en déduit la valeur de la pression à l'équilibre par lecture de l'ordonnée du point correspondant.

La pression de plateau d'hydrogène n'est pas inhérente à la composition de l'alliage hydrurable mais à la composition de la phase qui absorbe l'hydrogène. Or, pour une même composition d'alliage, des modes d'élaboration différents, notamment des traitements thermiques différents, peuvent conduire à l'obtention d'un alliage monophasé ou d'un alliage multiphasé dont la composition d'aucune des phases n'est identique à celle de l'alliage.

Dans un mode de réalisation, l'alliage présente une pression d'équilibre avec l'hydrogène $H_2$ à 40°C pour une concentration massique en hydrogène atomique dans l'alliage de 0,5%, comprise entre 0,01 et 5 bar, de préférence entre 0,01 et 1 bar, de préférence encore entre 0,05 et 0,7 bar. Il est nécessaire d'adapter les conditions de synthèse de l'alliage dans une plage de températures comprises entre 700 et 900 °C sous une pression comprise entre 40 et 80 MPa suivant sa composition pour obtenir les caractéristiques désirées.

Selon un mode de réalisation préféré, la concentration massique maximale d'hydrogène dans l'alliage sous une pression de 10 bars est supérieure à 1,3 %, de préférence supérieure à 1,45 %. Il est nécessaire d'adapter les conditions de synthèse de l'alliage dans une plage de températures comprises entre 700 et 900 °C sous une pression comprise entre 40 et 80 MPa suivant sa composition pour obtenir les caractéristiques désirées.

L'invention concerne aussi un procédé de préparation d'un alliage hydrurable par un procédé de frittage rapide. Ce procédé de fabrication comprend les étapes de :

a) mélange de $Mg_2Ni$ avec un composé comprenant :

i) du nickel,
ii) un ou plusieurs éléments choisis dans le groupe consistant en les terres rares et l'yttrium, avec éventuellement Ti et/ou Zr,
iii) éventuellement un élément choisi dans le groupe consistant en Mn, Al, Co, Fe et un mélange de ceux-ci ;

b) broyage du mélange ;
c) frittage du mélange par compression du mélange et application d'un courant à travers le mélange.

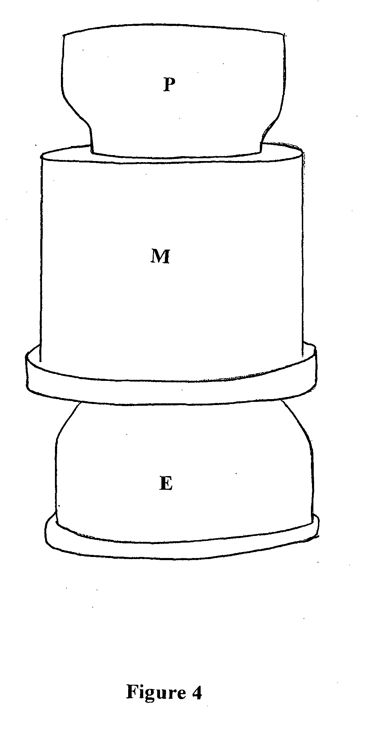

L'étape c) peut être réalisée en utilisant la technique de frittage rapide (SPS Spark Plasma Sintering), qui est aussi connue sous l'acronyme FAST (Field Activated Sintering Technique). Par l'application simultanée d'une force de compression et d'un courant continu crénelé de grande intensité, cette technique permet le frittage complet de poudres en seulement quelques minutes. On broie un mélange comprenant $Mg_2Ni$ et un composé comprenant du nickel et un ou plusieurs éléments choisis dans le groupe consistant en les terres rares et l'yttrium. On peut éventuellement ajouter au mélange du titane et/ou du zirconium ainsi qu'un ou plusieurs éléments choisis parmi Mn, Al, Co, Fe. On place le mélange entre une enclume et un piston. Le mélange est comprimé sous une force comprise de préférence entre 40 et 80 MPa et chauffé par effet Joule, ce qui entraîne le frittage. Des températures comprises entre 750 et 1000°C peuvent être obtenues. La figure 4 représente une matrice M contenant le mélange de poudre insérée entre un piston P et une enclume M.

Il a été découvert que la structure de phase 'cristalline à empilement aléatoire' de l'alliage selon l'invention pouvait être obtenue en appliquant le procédé tel que décrit à un mélange comprenant du nickel et un ou plusieurs éléments choisis dans le groupe consistant en les terres rares et l'yttrium.

L'invention concerne aussi une anode (électrode négative) comprenant l'alliage comme matière électrochimiquement active. L'anode est fabriquée en empâtant un support conducteur électrique avec une pâte constituée d'un mélange aqueux de l'alliage selon l'invention, avec des additifs et éventuellement avec des agents conducteurs.

Le support peut être de type mousse, feutre, feuillard perforé plan ou tridimensionnel, en nickel ou en acier nickelé.

Les additifs sont destinés à faciliter la mise en oeuvre ou les performances de l'anode. Ils peuvent être des épaississants tels que la carboxyméthylcellulose (CMC), l'hydroxypropylméthylcellulose (HPMC), l'acide polyacrylique (PAAc), le poly(éthylèneoxyde) (PEO). Ils peuvent aussi être des liants tels que les copolymères de butadiène-styrène (SBR), le polystyrène acrylate (PSA), le polytétrafluoroéthylène (PTFE). Ils peuvent être aussi des fibres polymères, telles que le polyamide, le polypropylène, le polyéthylène, etc., pour améliorer les propriétés mécaniques de l'électrode.

Les agents conducteurs peuvent être de la poudre de nickel, de la poudre ou des fibres de carbone, des nanotubes.

L'alliage peut être mélangé avec un composé d'yttrium afin d'augmenter la capacité de l'anode. En particulier, cet effet se manifeste dans le cas de décharges sous fort courant (décharges au régime de 5C). Le mélange de l'alliage avec un composé d'yttrium a également pour effet d'augmenter la durée de vie en cyclage de l'anode.

Le composé d'yttrium est choisi dans une liste non exhaustive comprenant un oxyde d'yttrium tel que $Y_2O_3$, un hydroxyde d'yttrium tel que $Y(OH)_3$ ou un sel d'yttrium. De préférence, le composé d'yttrium est l'oxyde d'yttrium $Y_2O_3$.

Le composé d'yttrium est mélangé à l'alliage en une proportion telle que la masse d'yttrium représente de 0,1 à 2 % de la masse de l'alliage, de préférence de 0,2 à 1 % de la masse d'alliage, de préférence de 0,2 à 0,7 % de la masse d'alliage.

Selon un mode de réalisation préféré, l'alliage est mélangé avec un composé à base de manganèse choisi dans une liste non exhaustive comprenant des oxydes comme MnO, $MnO_2$, ou un hydroxyde ou un sel à base de manganèse. De préférence, le composé à base de manganèse est l'oxyde MnO. Le mélange de l'alliage avec un composé de manganèse a pour effet d'empêcher ou de retarder l'apparition de micro courts-circuits attribués à des dépôts de cobalt provenant de l'électrode positive ou de l'électrode négative, dans le séparateur au cours du cyclage de l'accumulateur. Ces micros courts circuits engendrent en effet une autodécharge exacerbée qui se traduit par une accélération de la réduction de la capacité restituée en décharge. La proportion massique de manganèse dans l'électrode négative est comprise entre 1,5 et 2,5 % de la masse d'alliage hydrurable.

L'invention concerne aussi un accumulateur à électrolyte alcalin comprenant au moins une anode selon l'invention, au moins une cathode (électrode positive) au nickel, au moins un séparateur et un électrolyte alcalin.

La cathode est constituée de la masse active cathodique déposée sur un support qui peut être un support fritté, une mousse de nickel, un feuillard perforé plan ou tridimensionnel en nickel ou en acier nickelé.

La masse active cathodique comprend la matière active cathodique et des additifs destinés à faciliter sa mise en oeuvre ou ses performances. La matière active cathodique est un hydroxyde de nickel $Ni(OH)_2$ qui peut être partiellement substitué par Co, Mg et Zn. Cet hydroxyde peut être partiellement oxydé et peut être revêtu d'une couche de surface à base de composés du cobalt.

Parmi les additifs, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), l'acide polyacrylique (PAAc), le polystyrène maléique anhydride (SMA), les copolymères de butadiène-styrène (SBR), éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexa-fluoropropylène (PPHF), l'éthylvinylalcool (EVA), l'oxyde de zinc ZnO, des fibres (Ni, C, polymères), des poudres de composés à base de cobalt tels que Co, $Co(OH)_2$, CoO, $Li_xCoO_2$, $H_xCoO_2$, $Na_xCoO_2$, ainsi que des additifs destinés à améliorer l'efficacité de charge comme $Y_2O_3$, $Yb_2O_3$ ou $Nb_2O_5$.

Le séparateur est généralement composé de fibres en polyoléfine (par ex. polypropylène) ou polyamide poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique on prépare les pâtes pour électrodes, on fabrique les électrodes, puis on superpose au moins une cathode, un séparateur et une anode afin de constituer le faisceau électrochimique. On introduit le faisceau électrochimique dans un godet conteneur et on l'imprègne avec l'électrolyte alcalin aqueux. On ferme ensuite l'accumulateur.

L'invention concerne tout format d'accumulateurs : format prismatique (électrodes planes) ou format cylindrique (électrodes spiralées ou concentriques).

L'accumulateur de type Ni-MH selon l'invention peut être du type ouvert (ouvert ou semi-ouvert) ou du type étanche.

L'accumulateur selon l'invention est particulièrement bien adapté comme source d'énergie pour un véhicule électrique ou un appareil portable.

D'autres caractéristiques et avantages de la présente invention apparaîtront à la lecture des exemples.

EXEMPLES

A) Fabrication de l'alliage

Un alliage 1 selon l'invention de composition $La_{0,8}Mg_{0,2}Ni_{3,67}$ a été préparé par la technique de frittage flash (SPS pour Spark Plasma Sintering) à partir de deux précurseurs : $Mg_2Ni$ élaboré par métallurgie des poudres et $LaNi_y$ (y=4,3875) élaboré par fusion d'un mélange des éléments simples dans un four à induction. Ces précurseurs ont été pulvérisés pendant 2h dans un broyeur planétaire Fritsch Pulverisette 4 avec une vitesse de rotation de 400 tours par minute et un rapport massique Bille /Poudre égal à 10:1. Ensuite le mélange a été fritté par SPS sous une pression de 50 MPa pendant une heure à une température de 820°C.

Un alliage 2 servant de contre-exemple, de même composition que l'alliage 1, a été préparé par une technique de refroidissement rapide (melt spinning), à une vitesse de $10^6$ K/s, à partir des deux précurseurs utilisés pour élaborer l'alliage 1. L'alliage ainsi préparé a ensuite été recuit durant 10 jours à une température de 800°C sous atmosphère inerte.

Un alliage e 3 de l'art antérieur de composition $La_{0,57}Ce_{0,27}Nd_{0,12}Pr_{0,04}Ni_{3,95}Mn_{0,40}Al_{0,30}Co_{0,55}$ a été préparé par cofusion des éléments simples dans un creuset segmenté en cuivre refroidi par eau et refroidissement lent. Cet alliage a ensuite été recuit pendant 4 jours à 1050°C sous atmosphère inerte.

Le tableau 1 ci-dessous rappelle ces compositions.

Tableau 1 : Compositions élémentaires et conditions d'élaboration des alliages (SPS= spark pressure sintering ou frittage flash, MS=melt spinning ou refroidissement rapide, CF coulée en creuset refroidi ; A représente les éléments La, Ce, Nd, Pr et Mg ; B représente les éléments Ni, Mn, Al et Co)

| Alliage | La | Ce | Nd | Pr | Mg | Ni | Mn | Al | Co | B/A | Elaboration | Recuit |
|---|---|---|---|---|---|---|---|---|---|---|---|---|
| 1 | 0,80 | 0 | 0 | 0 | 0,2 | 3,67 | 0 | 0 | 0 | 3,67 | SPS 820°C | |
| 2 | 0,80 | 0 | 0 | 0 | 0,2 | 3,67 | 0 | 0 | 0 | 3,67 | MS | 800°C 10 jours |
| 3 | 0,57 | 0,27 | 0,12 | 0,04 | 0 | 3,95 | 0,4 | 0,3 | 0,55 | 5,20 | CF | 1050°C 4 jours |

Les alliages ainsi obtenus ont été caractérisés par diffraction des rayons X (DRX) à l'aide d'un diffractomètre Bruker AXS D8 $\theta$-$\theta$ (géométrie Bragg-Brentano, rayonnement Cu K$\alpha$, domaine angulaire en $2\theta$ = 20 à 90°, pas 0,04°). L'analyse des phases et la détermination structurale ont été réalisées à l'aide du programme d'ajustement de l'ensemble du profil FULLPROF, basé sur la méthode de Rietveld. L'analyse chimique locale a été effectuée à l'aide d'une microsonde électronique en spectroscopie dispersive en longueur d'onde (WDS-EPMA Wavelength Dispersive Spectroscopy- Electron Probe Micro Analysis) CAMEBAX SX-100.

Les courbes isothermes d'absorption et de désorption de l'hydrogène (PCT) ont été établies à 40°C par la méthode volumétrique de Sievert.

Le tableau 2 rappelle la composition des alliages en termes de phases ainsi que leurs caractéristiques PCT.

Tableau 2: Compositions en termes de phases et caractéristiques PCT des alliages (capacité sous une pression de 10 bars et pression d'équilibre à mi capacité).

| Alliage | % Phases | | | | | | | PCT à 40°C | |
|---|---|---|---|---|---|---|---|---|---|
| | $AB_3$ | $A_2B_7$ h | $A_2B_7$ r | $A_5B_{19}$h | $A_5B_{19}$r | $AB_5$ | à empilement aléatoire | Pression (bar) | Capacité (%) |
| 1 | 0 | 6 | 9 | 10 | 50 | 0 | 25 | 0,4 | 1,53 |
| 2 | 14 | 23 | 0 | 7 | 15 | 40 | 0 | 1,0 | 1,48 |
| 3 | 0 | 0 | 0 | 0 | 0 | 100 | 0 | 0,45 | 1,15 |

Les échantillons pour les examens par microscopie électronique par transmission à haute résolution (HRTEM) ont été préparés par polissage mécanique et amincissement par faisceau d'ions avant d'être transférés immédiatement dans le microscope afin d'éviter l'oxydation de la surface. Les observations ont été réalisées à l'aide d'un microscope FEI Tecnai sous une tension d'accélération de 200 kV. Les photographies par microscopie électronique par transmission à haute résolution montrent des lignes verticales grises qui apparaissent en relief (il s'agit des motifs de type L ou phase de Laves) par rapport à un fond constitué de lignes verticales qui apparaissent plus claires (motifs de type C).

Dans le cas de l'alliage 2 du contre exemple, réalisé par 'melt spinning', les microstructures observées sont caractérisées par un nombre de lignes claires (et une distance) entre deux lignes sombres qui est constant sur une longue distance. Cette structure est caractéristique d'une phase cristalline, de type $A_5B_{19}$ pour un nombre de lignes claires entre deux lignes sombres égal à 3. En revanche, dans le cas de l'alliage selon l'invention, on observe que le nombre de lignes claires entre deux lignes sombres n'est pas constant et varie de manière aléatoire.

B) Fabrication des électrodes :

Pour réaliser les électrodes, l'alliage est pulvérisé mécaniquement jusqu'à une granulométrie de 60 $\mu$m ($Dv_{50}$=60 $\mu$m, $Dv_{50}$ diamètre médian en volume de l'échantillon). La poudre ainsi obtenue est mélangée avec 1 % de polymère de styrène-butadiène (SBR styrene-butadiene rubber) et 0,5 % de CMC dans une solution aqueuse pour réaliser une pâte qui a été enduite dans une mousse de nickel. La bande ainsi obtenue a été laminée et séchée, puis découpée pour réaliser des électrodes négatives.

C) Fabrication de l'accumulateur Ni-MH

Un faisceau constitué d'une électrode négative encadrée de deux électrodes positives contenant de l'hydroxyde de nickel de capacité excédentaire et séparée d'elles par un séparateur constitué d'une membrane imperméable à l'oxygène et de deux nappes de non tissé en polyoléfine, a été monté et serré entre cales dans un bac en polyéthylène pour constituer un accumulateur ouvert dont la capacité, égale à 1Ah, est limitée par l'électrode négative. Le faisceau a ensuite été imprégné sous vide d'une solution aqueuse de KOH de concentration 8,7 N en excès. La capacité de l'alliage a été mesurée en éléments ouverts limités par l'électrode négative, de technologie mousse, dans les conditions suivantes :

Après un cycle de formation, l'accumulateur a subi une dizaine de cycles d'activation constitués :

- d'une charge de 16 h avec un courant de 3 5 mA/g,
- d'un repos de 1 h et
- d'une décharge effectuée avec un courant de 70 mA/g jusqu'à une tension d'arrêt de 0,9V.

Ensuite, l'accumulateur a subi un vieillissement en cyclage rapide constitué d'une décharge de 48 min avec arrêt à 0,9V et d'une charge de 52 min à un régime de 350 mA/g. Un cycle de mesure de performance est effectué par intermittence dans les conditions des cycles d'activation. Les résultats sont présentés dans le tableau 3.

Tableau 3 : Résultats de l'évaluation électrochimique.

| | | Capacités (mAh/g) en décharge C/5 après charge 16h C/10 et repos 1h | | | Indice de stabilité (%) |
|---|---|---|---|---|---|
| Etat | | Initial | Activé | Vieilli | |
| Cycle | | 1 | 10 | 100 | $S_{100}$ |
| Alliage | 1 | 318 | 322 | 275 | 86,5 |
| | 2 | 313 | 275 | 245 | 78,3 |
| | 3 | 272 | 282 | 241 | 88,6 |

L'alliage 1 selon l'invention présente à l'état activé une capacité de 322 mAh/g, supérieure de 47 mAh/g à celle de l'alliage 2 (contre exemple) et supérieure de 40 mAh/g à celle de l'alliage 3 de l'art antérieur. Ce tableau présente également la capacité restituée dans les mêmes conditions que ci-dessus (charge 16h à 35 mA/g, repos 1h, décharge à 70 mA/g, tension d'arrêt de 0,9 V) par ces éléments au cycle 100, c'est à dire après un vieillissement de 90 cycles en cyclage rapide au régime C. La stabilité de l'alliage est estimée par l'index $S_{100}$ calculé comme suit :

$$S_{100} = (\text{Capacité mesurée au cycle 100 / Capacité au cycle 1}) \times 100.$$

Ces résultats montrent que l'alliage 3 de l'art antérieur présente une capacité initiale faible de 272 mAh/g et une très bonne stabilité en cyclage ($S_{100}$= 88,6%). En revanche, l'alliage du contre exemple 2, de même composition que l'alliage 1 selon l'invention, mais réalisé par la technique de « melt spinning », présente une capacité initiale élevée de 313 mAh/g mais une stabilité en cyclage médiocre ($S_{100}$= 78,3%). L'alliage 1 selon l'invention présente l'avantage de combiner une capacité initiale élevée de 318 mAh/g et une stabilité en cyclage dont le niveau reste élevé (86,6%) et voisin de celui de l'alliage 3 de l'art antérieur.

**Revendications**

**1.**　Alliage hydrurable, de formule $R_{1-x-y}Mg_xM_yNi_{s-a}B_a$ dans laquelle

- R est choisi dans le groupe consistant en les terres rares, l'yttrium et un mélange de ceux-ci ;
- M représente Zr et/ou Ti ;
- B est choisi dans le groupe consistant en Mn, Al, Co, Fe et un mélange de ceux-ci ; $0,1 < x < 0,4$ ; $0 \leq y < 0,1$ ; $3 < s < 4,5$ et $0 \leq a < 1$ ;

dont au moins 5% du volume est constitué d'un empilement de séquences d'un motif de type $A_2B_4$ et n motifs de type $CaCu_5$ distribuées de façon aléatoire suivant une direction, n étant un nombre entier compris entre 1 et 10 et représentant le nombre de motifs de type $CaCu_5$ par motif de type $A_2B_4$.

**2.** Alliage selon la revendication 1, dans lequel le volume constitué de l'empilement de séquences d'un motif de type $A_2B_4$ et n motifs de type $CaCu_5$ distribuées de façon aléatoire, représente au moins 10 % du volume de l'alliage, de préférence au moins 20%.

**3.** Alliage selon l'une des revendications 1 et 2, dans lequel le volume constitué de l'empilement de séquences d'un motif de type $A_2B_4$ et n motifs de type $CaCu_5$ distribuées de façon aléatoire, représente moins de 90 % du volume de l'alliage, de préférence moins de 70%.

**4.** Alliage selon l'une des revendications 1 à 3, dans lequel n est inférieur ou égal à 8, de préférence inférieur ou égal à 6, de préférence encore inférieur ou égal à 4.

**5.** Alliage selon l'une des revendications 1 à 4, dans lequel x est compris entre 0,1 et 0,3, de préférence entre 0,15 et 0,25.

**6.** Alliage selon l'une des revendications 1 à 5, dans lequel a est inférieur à 0,3, de préférence inférieur à 0,15.

**7.** Alliage selon l'une des revendications 1 à 6, dans lequel s est compris entre 3 et 4, de préférence entre 3,5 et 4.

**8.** Alliage selon l'une des revendications 1 à 7, comprenant Nd et Pr, dans lequel le ratio molaire $R''/R'$ est inférieur à 0,5, $R''$ désignant la somme des nombres de moles de Nd et de Pr et $R'$ désignant la somme des nombres de moles de terres rares, Y, Zr et Ti.

**9.** Procédé de fabrication d'un alliage hydrurable comprenant les étapes de :

   a) mélange de $Mg_2Ni$ avec un composé comprenant :

   i) du nickel,
   ii) un ou plusieurs éléments choisis dans le groupe consistant en les terres rares et l'yttrium, avec éventuellement Ti et/ou Zr,
   iii) éventuellement un élément choisi dans le groupe consistant en Mn, Al, Co, Fe et un mélange de ceux-ci ;

   b) broyage du mélange ;
   c) frittage du mélange par compression du mélange et application d'un courant à travers le mélange.

**10.** Procédé selon la revendication 9, dans lequel l'étape c) est réalisée par la technique de frittage flash.

**11.** Procédé selon la revendication 9 ou 10, dans lequel le composé de l'étape a) a pour formule $R'Ni_y$ avec y compris entre 4 et 5, $R'$ désignant la somme des nombres de moles de terres rares, Y, Zr et Ti.

**12.** Procédé selon l'une des revendications 9 à 11, dans lequel l'alliage hydrurable a pour formule $R_{1-x-y}Mg_xM_yNi_{s-a}B_a$ dans laquelle

   - R est choisi dans le groupe consistant en les terres rares, l'yttrium et un mélange de ceux-ci ;
   - M représente Zr et/ou Ti ;
   - B est choisi dans le groupe consistant en Mn, Al, Co, Fe et un mélange de ceux-ci ; $0,1 < x < 0,4$ ; $0 \leq y < 0,1$ ; $3 < s < 4,5$ et $0 \leq a < 1$ ;

**13.** Electrode négative d'accumulateur alcalin de type nickel hydrure métallique, comprenant un alliage selon l'une des revendications 1 à 8.

**14.** Accumulateur alcalin de type nickel hydrure métallique comprenant une électrode selon la revendication 13.


**Patentansprüche**

**1.** Hydrierbare Legierung der Formel $R_{1-x-y}Mg_xM_yNi_{s-a}B_a$, wobei

   - R aus der Gruppe gewählt ist, die aus den seltenen Erden, Yttrium und einer Mischung daraus besteht;
   - M für Zr und/oder Ti steht;

- B aus der Gruppe ausgewählt ist, die aus Mn, Al, Co, Fe und einer Mischung daraus besteht;

  $0,1 < x < 0,4$; $0 \leq y < 0,1$; $3 < s < 4,5$ und $0 \leq a < 1$;
  wobei mindestens 5 % von deren Volumen aus einer Aneinanderreihung von Sequenzen aus einem Baustein des Typs $A_2B_4$ und n Bausteinen des Typs $CaCu_5$ bestehen, wobei die Sequenzen gemäß einer Richtung zufällig verteilt sind, wobei n eine ganze Zahl im Bereich von 1 bis 10 ist und für die Anzahl an Bausteinen des Typs $CaCu_5$ pro Baustein des Typs $A_2B_4$ steht.

**2.** Legierung nach Anspruch 1, wobei das Volumen, welches aus der Aneinanderreihung von Sequenzen aus einem Baustein des Typs $A_2B_4$ und n Bausteinen des Typs $CaCu_5$ besteht, wobei in Sequenzen zufällig verteilt sind, mindestens 10 % des Volumens der Legierung ausmacht, vorzugsweise mindestens 20 %.

**3.** Legierung nach einem der Ansprüche 1 und 2, wobei das Volumen, welches aus der Aneinanderreihung von Sequenzen aus einem Baustein des Typs $A_2B_4$ und n Bausteinen des Typs $CaCu_5$ besteht, wobei in Sequenzen zufällig verteilt sind, weniger als 90 % des Volumens der Legierung ausmacht, vorzugsweise weniger als 70 %.

**4.** Legierung nach einem der Ansprüche 1 bis 3, wobei n kleiner oder gleich 8 ist, vorzugsweise kleiner oder gleich 6, mit noch größerem Vorzug kleiner oder gleich 4.

**5.** Legierung nach einem der Ansprüche 1 bis 4, wobei x im Bereich von 0,1 bis 0,3, vorzugsweise von 0,15 bis 0,25, liegt.

**6.** Legierung nach einem der Ansprüche 1 bis 5, wobei a kleiner als 0,3 ist, vorzugsweise kleiner als 0,15.

**7.** Legierung nach einem der Ansprüche 1 bis 6, wobei s im Bereich von 3 bis 4, vorzugsweise von 3,5 bis 4, liegt.

**8.** Legierung nach einem der Ansprüche 1 bis 7, umfassend Nd und Pr, wobei das Molverhältnis R"/R' kleiner als 0,5 ist, wobei R" die Summe der Molanzahlen an Nd und an Pr bezeichnet und R' die Summe der Molanzahlen an seltenen Erden, Y, Zr und Ti bezeichnet.

**9.** Verfahren zur Herstellung einer hydrierbaren Legierung, welches die folgenden Schritte umfasst:

  a) Mischen von $Mg_2Ni$ mit einer Verbindung, die Folgendes umfasst:

    i) Nickel,
    ii) ein oder mehrere Elemente, die aus der Gruppe ausgewählt sind, die aus den seltenen Erden und Yttrium besteht, möglicherweise mit Ti und/oder Zr,
    iii) möglicherweise ein Element, das aus der Gruppe ausgewählt ist, die aus Mn, Al, Co, Fe und einer Mischung daraus besteht;

  b) Zerkleinern der Mischung;
  c) Sintern der Mischung, indem die Mischung verdichtet wird und ein Strom durch die Mischung geleitet wird.

**10.** Verfahren nach Anspruch 9, wobei der Schritt c) mittels der Technik des Kurzzeitsinterns durchgeführt wird.

**11.** Verfahren nach Anspruch 9 oder 10, wobei die Verbindung des Schrittes a) die Formel $R'Ni_y$ aufweist, wobei y im Bereich von 4 bis 5 liegt und R' die Summe der Molanzahlen an seltenen Erden, Y, Zr und Ti bezeichnet.

**12.** Verfahren nach einem der Ansprüche 9 bis 11, wobei die hydrierbare Legierung die Formel $R_{1-x-y}Mg_xM_yNi_{s-a}B_a$ aufweist, wobei

  - R aus der Gruppe gewählt ist, die aus den seltenen Erden, Yttrium und einer Mischung daraus besteht;
  - M für Zr und/oder Ti steht;
  - B aus der Gruppe ausgewählt ist, die aus Mn, Al, Co, Fe und einer Mischung daraus besteht;

  $0,1 < x < 0,4$; $0 \leq y < 0,1$; $3 < s < 4,5$ und $0 \leq a < 1$;

**13.** Negative Elektrode für einen alkalibasierten Akkumulator vom Typ Nickel-Metallhydrid, welche eine Legierung nach einem der Ansprüche 1 bis 8 umfasst.

**14.** Alkalibasierter Akkumulator vom Typ Nickel-Metallhydrid, der eine Elektrode nach Anspruch 13 umfasst.

**Claims**

**1.** A hydridable alloy of formula $R_{1-x-y}Mg_xM_yNi_{s-a}B_a$ wherein

- R is selected from the group consisting in rare earths, yttrium and a mixture thereof;
- M represents Zr and/or Ti;
- B is selected from the group consisting in Mn, Al, Co, Fe and a mixture thereof;

$0.1 < x < 0.4$ ; $0 \leq y < 0.1$ ; $3 < s < 4.5$ and $0 \leq a < 1$;

at least 5% of the volume of which consists of a stack of sequences with a pattern of the $A_2B_4$ type and n patterns of the $CaCu_5$ type randomly distributed along one direction, n being an integer comprised between 1 and 10 and representing the number of patterns of the $CaCu_5$ type per pattern of the $A_2B_4$ type.

**2.** The alloy according to claim 1, wherein the volume consisting of the stack of sequences with a pattern of the $A_2B_4$ type and n patterns of the $CaCu_5$ type randomly distributed represents at least 10% by volume of the alloy, preferably at least 20%.

**3.** The alloy according to one of claims 1 and 2, wherein the volume consisting of the stack of sequences with a pattern of the $A_2B_4$ type and n patterns of the $CaCu_5$ type randomly distributed, represents less than 90% by volume of the alloy, preferably less than 70%.

**4.** The alloy according to one of claims 1 to 3, wherein n is less than or equal to 8, preferably less than or equal to 6, still preferably less than or equal to 4.

**5.** The alloy according to one of claims 1 to 4, wherein x is comprised between 0.1 and 0.3, preferably between 0.15 and 0.25.

**6.** The alloy according to one of claims 1 to 5, wherein a is less than 0.3, preferably less than 0.15.

**7.** The alloy according to one of claims 1 to 6, wherein s is comprised between 3 and 4, preferably between 3.5 and 4.

**8.** The alloy according to one of claims 1 to 7, comprising Nd and Pr, wherein the R"/R' molar ratio is less than 0.5, R" designating the sum of the number of moles of Nd and of Pr, and R' designating the sum of numbers of moles of rare earths, Y, Zr and Ti.

**9.** A method for making a hydridable alloy comprising the steps:

a) mixing $Mg_2Ni$ with a compound comprising:

i) nickel,
ii) one or several elements selected from the group consisting in rare earths and yttrium, with optionally Ti and/or Zr,
iii) optionally an element selected from the group consisting in Mn, Al, Co, Fe and a mixture thereof;

b) milling the mixture;
c) sintering the mixture by compressing the mixture and applying current through the mixture.

**10.** The method according to claim 9, wherein step c) is carried out by the flash sintering technique.

**11.** The method according to claim 9 or 10, wherein the compound of step a) has the formula $R'Ni_y$ with y comprised between 4 and 5, R' designating the sum of the numbers of moles of rare earths, Y, Zr and Ti.

**12.** The method according to one of claims 9 to 11, wherein the hydridable alloy has the formula $R_{1-x-y}Mg_xM_yNi_{s-a}B_a$ wherein

- R is selected from the group consisting in rare earths, yttrium and a mixture thereof;
- M represents Zr and/or Ti;
- B is selected from the group consisting in Mn, Al, Co, Fe and a mixture thereof;

$0.1 < x < 0.4$ ; $0 \leq y < 0.1$ ; $3 < s < 4.5$ and $0 \leq a < 1$.

13. A negative electrode of an alkaline secondary cell of the nickel metal hydride type, comprising an alloy according to one of claims 1 to 8.

14. An alkaline secondary cell of the nickel metal hydride type comprising an electrode according to claim 13.

Figure 1A

Figure 1B

Figure 2A

Figure 2B

Figure 3

**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001316744 A
- JP 2002069554 A
- EP 1026764 A
- US 6214492 B
- US 20040134569 A
- US 20040146782 A
- US 20050100789 A
- US 20050175896 A

- US 20050164083 A
- EP 2096691 A
- US 20080085209 A
- JP 2010073424 A
- JP 9194971 A
- EP 0783040 A
- JP 2004115870 A

**Littérature non-brevet citée dans la description**

- **T.OZAKI.** *J.Alloys and Comp.,* 2007, vol. 446,447, 620-624